# EUROPEAN PATENT APPLICATION

(11) **EP 3 005 858 A1**
(43) Date of publication of application: **13.04.2016**
(21) Application number: 14801055.6
(22) Date of filing: 26.02.2014
(51) Int. Cl.: A01G 31/00, A01G 9/02, A01G 31/02

(54) **PLANT HOLDER AND TRANSPLANTATION DEVICE**

(30) Priority: 24.05.2013 JP 2013110036
(71) Applicant: Tsubakimoto Chain Co., Osaka-shi, Osaka 530-0005 (JP)
(72) Inventor: KOUNO, Kouji, Osaka-shi Osaka 530-0005 (JP); HIRAI, Tatsuya, Osaka-shi Osaka 530-0005 (JP); OKAZAKI, Yu, Osaka-shi Osaka 530-0005 (JP); OHARA, Hitoshi, Osaka-shi Osaka 530-0005 (JP)
(74) Representative: von Kreisler Selting Werner - Partnerschaft von Patentanwälten und Rechtsanwälten mbB
(86) International application number: PCT/JP2014/054616
(87) International publication number: WO 2014/188751

(57) **Abstract**

There is provided a plant holder capable of, with a simple configuration, causing a root of a plant stock to pass through a holding hole downwardly without damaging the root of the plant stock, preventing a leaf from drooping downward and being damaged, and improving workability when transplantation and harvest are automated without damaging the plant stock by contact with the plant stock.

A plant holder 110 includes a fitting portion 111 and having a plant stock support hole 114 in an inner surface, a placement portion 113 which is provided above the fitting portion 111, and a flange portion 112 which is provided above the placement portion 113. The outer diameter of the placement portion 113 is formed smaller than the outer diameter of the flange portion 112, and larger than the outer diameter of the holding hole 121.

## Description

### Technical Field

The present invention relates to a plant holder which has an outer peripheral portion, at least part of which is fitted in a holding hole of a cultivation panel, and a plant stock support hole supporting a plant stock directly or indirectly, and which is held by the cultivation panel, and a transplantation device which holds and moves the plant holder, and relates to a plant holder and a transplantation device suitable for automating transplantation of a plant stock corresponding to its growth and harvest of the grown plant stock in, e.g., a hydroponic cultivation facility such as in a plant factory.

### Background Art

Conventionally, in a plant factory or the like, a hydroponic cultivation facility in which a plant stock is held by a holding member such as, e.g., a cultivation panel having a plurality of holding holes, and a root of the plant stock that grows downward through the holding holes of the cultivation panel is soaked in a cultivation liquid or the like, or the cultivation liquid or the like is sprayed on the root is well known.

In the hydroponic cultivation facility, for example, in the case where a plant that grows widely in a horizontal direction is held by a holding panel and is cultivated, space efficiency is lowered and the entire production efficiency is deteriorated in the case of a single cultivation panel in which the distance between the holding holes is set based on the grown plant.

To cope with this, the plant stock is transplanted to the cultivation panel in which different distances between the holding holes are set in accordance with the growth of the plant. In terms of the space efficiency, it is desirable to perform the transplantation operation frequently in accordance with the growth, and a cultivation facility in which the transplantation operation is automated by a transplantation device in order to perform the transplantation operation smoothly and efficiently is proposed (see, e.g., Patent Document 1).

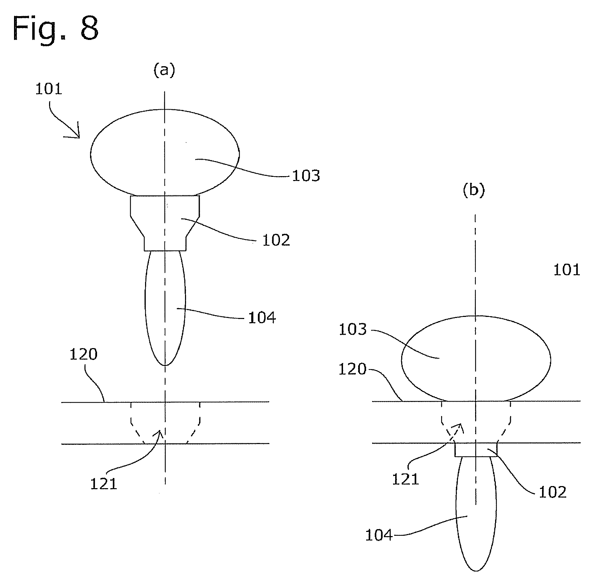

Conventionally, in the automated cultivation facility, as shown in FIG. 8, a plant stock 101 is supported by a support 102 such that a leaf 103 grows upward and a root 104 grows downward, and the support 102 is directly inserted into and supported by a holding hole 121 of a cultivation panel 120.

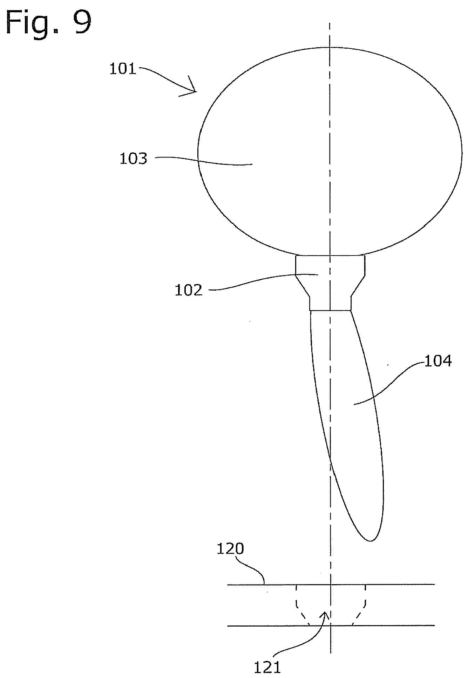

The plant stock 101 is transplanted to another cultivation panel 120 having a different distance between the holding holes 121 in accordance with the growth of the plant stock 101. Due to the growth or horizontal movement at the time of the transplantation operation, the root 104 spreads beyond the holding hole 121 or the root 104 is not directed vertically downward accurately and, as shown in FIG. 9, there has been a problem that the root 104 cannot be inserted into the holding hole 121 successfully when the support 102 is moved down from immediately above the cultivation panel 120 to which the plant stock 101 is to be transplanted.

To cope with this, a transplantation device in which the smooth and reliable transplantation operation is performed by using a suction unit which sucks the root of the plant stock from below the holding hole of the cultivation panel and causes the root of the plant stock to pass through the holding hole such that a state in which part or all of the root of the plant stock does not extend downward through the holding hole is avoided and the root of the plant stock is reliably caused to extend from below the holding hole is well known (see, e.g., Patent document 2).

In addition, a device having a structure in which the plant stock held by the support via a plant holder having a flange in an upper portion is supported by the holding hole of the cultivation panel, and the holding hole is larger than the support while a capability to hold the plant stock to the cultivation panel is improved is well known (see, e.g., Patent Document 3).

Further, a device which grasps the plant holder (pot) and a device which grasps the plant stock itself in order to automate the transplantation and the harvest of the plant stock supported via the plant holder are well known (see, e.g., Patent Documents 4 and 5).

### Prior Art Document

### Patent Document

Patent Document 1: Japanese Patent Application Laid-open No. H7-147857
Patent Document 2: Japanese Patent Application Laid-open No. 2000-166408
Patent Document 3: Japanese Patent Application Laid-open No. H8-308408
Patent Document 4: Japanese Patent Application Laid-open No. H7-147857
Patent Document 5: Japanese Patent Application Laid-open No. H8-322407

### Summary of Invention

### Technical Problem

As described above, in the conventional cultivation facilities described in Patent Documents 1 and 2, when the plant stock is transplanted into the holding hole of the cultivation panel, there is a possibility that part or all of the root does not enter the holding hole or remains in the holding hole, and there have been cases where the plant stock cannot be transplanted into the holding hole or part or all of the root does not extend downward through the holding hole even when the plant stock is transplanted into the holding hole.

This can be alleviated by using the suction unit which sucks the root of the plant stock and causes the root thereof to pass through the holding hole to some extent as in Patent Document 2. However, a facility for using the suction unit is complicated and, in the case where the quantity and the spread of the root inserted into the holding hole are large and the root is pushed against an inner surface of the holding hole, there is a possibility that part or all of the root remains due to drag with the inner surface of the holding hole and the root cannot extend downward through the holding hole. When a suction force is increased, there has been a possibility that the root is damaged by the suction.

As in Patent Document 3, it is possible to alleviate the state in which part or all of the root does not extend downward through the holding hole to some extent by having the structure in which the size of the holding hole can be increased, but the diameter of the holding hole has to be smaller than that of the flange, and it has not been possible to completely prevent the above state.

In addition, in the conventional cultivation facility, in the case where the leaf of the plant stock grows laterally, there are cases where the leaf droops downward and comes into contact with the transplantation device or comes into contact with the cultivation panel, the cultivation liquid or the like after the transplantation so that there has been a problem that the commodity value of the plant stock is spoiled due to damage to the leaf, discoloring, deterioration, or dying of the leaf.

As in Patent Document 3, it is possible to prevent the leaf from drooping downward by the flange to some extent by causing the plant stock held by the support via the plant holder having the flange in the upper portion to be supported by the holding hole of the cultivation panel, but there has been a problem that it is necessary to change a handling unit of the plant holder in accordance with the size and the shape of the flange, and it is difficult to increase the size of the flange to such an extent that the damage to the leaf is adequately prevented by limitations on handling or the like.

Further, in the well known techniques described in Patent Documents 4 and 5, there has been a problem that it is necessary to provide a movable mechanism at a tip portion of a device which handles the plant holder of the transplantation device, and a complicated mechanism is required.

In addition, there is a possibility that the device which handles the plant holder comes into contact with the plant stock and the plant stock is thereby damaged, and there has been a problem that, in the case where the plant holder is handled using an articulated robot device or the like, a tip load is increased due to necessity to provide the movable mechanism at the tip, and the scale and the cost of the facility are increased.

The present invention solves these problems, and an object thereof is to provide the plant holder, the cultivation panel, and the transplantation device capable of, with a simple configuration, causing the root of the plant stock to pass through the holding hole downwardly without damaging the root of the plant stock, preventing the leaf from drooping downward and being damaged, and improving workability when the transplantation and the harvest are automated without damaging the plant stock due to contact with the plant stock.

### Solution to Problem

The plant holder according to the present invention is a plant holder that has an outer peripheral portion, at least part of which is fitted in a holding hole of a cultivation panel, and a plant stock support hole supporting a plant stock directly or indirectly, and that is held by the cultivation panel, the plant holder including a fitting portion fitted in the holding hole of the cultivation panel and having the plant stock support hole in an inner surface, a placement portion provided above the fitting portion, and a flange portion provided above the placement portion, wherein an outer diameter of the flange portion is formed larger than an outer diameter of the placement portion, and the outer diameter of the placement portion is formed larger than an outer diameter of the holding hole of the cultivation panel, whereby the problems described above are solved.

The transplantation device according to the present invention is a transplantation device including a holding portion holding the plant holder, wherein the holding portion is provided with two holding arms which extend forward, and a distance between the two holding arms is formed larger than a diameter of the placement portion and smaller than a diameter of the flange portion, whereby the problems described above are solved.

### Effects of Invention

According to the plant holder according to claim 1, it becomes possible to increase the diameter of the fitting portion and increase the diameter of the holding hole of the cultivation panel, and it is possible to cause the root of the plant stock to pass through the holding hole downwardly and extend downward without damaging the root of the plant stock, and hence it is possible to easily perform transplantation without adding a complicated facility in an automated cultivation facility.

In addition, the outer diameter of the flange portion is formed larger than the outer diameter of the placement portion, whereby it becomes possible to lift the flange portion from below only by inserting the holding arms having the distance between the holding arms smaller than the outer diameter of the flange portion from the side of the placement portion, and it is not necessary to provide a movable mechanism at a tip when handling of the plant holder is automated.

With this, it is possible to improve workability when the transplantation and the harvest are automated without damaging the plant stock by contact with the plant stock with a simple configuration.

Further, the placement portion and the flange portion do not hinder the handling, and hence it is possible to secure the sufficient diameter, and reliably prevent the leaf from drooping and coming into contact with the transplantation device or coming into contact with the cultivation panel, a cultivation liquid or the like and being damaged after the transplantation.

According to the configuration according to claim 2, the flange portion has an engagement wall portion which is provided upright in an upper portion, whereby it becomes possible to use the engagement wall portion in order to prevent disconnection when the flange portion is lifted from below, and perform automation of the transplantation and the harvest more reliably.

According to the configuration according to claim 3, the plant stock support hole is formed into a tapered shape, the diameter of which is reduced toward a lower portion from an upper portion, whereby it is possible to separate a support fitted in the plant stock support hole by lifting the support upward and fit the support in the plant stock support hole by moving down the support from above the plant stock support hole, and hence insertion and holding of the plant stock supported by the support are facilitated, and the workability at the time of the automation is further improved.

According to the configuration according to claim 4, an outer surface of the fitting portion is formed into a tapered shape, the diameter of which is reduced toward a lower portion from an upper portion, whereby the plant holder is automatically fitted at a correct position along the tapered shape when the plant holder is moved down from above the holding hole of the cultivation panel, and hence accurate positioning is not required and the workability is further improved.

In addition, the holding hole of the cultivation panel may also be formed into a tapered shape corresponding to the tapered shape of the outer peripheral surface of the fitting portion and, in this case, it becomes possible to reliably fix the plant holder to the holding hole of the cultivation panel, and it becomes easy to cause the root of the plant stock to pass through the holding hole downwardly along the tapered shape even when the root of the plant stock comes into contact with the holding hole of the cultivation panel at the time of insertion.

According to the configuration according to claim 5, at least part of a lower portion of the placement portion is formed into a flat shape which comes into contact with a surrounding portion of the holding hole of the cultivation panel, whereby the plant holder is stably placed when the plant holder is fitted in the holding hole of the cultivation panel, and hence it is not necessary to cause the holding hole of the cultivation panel to match the outer shape of the fitting portion, and the workability at the time of the movement of the cultivation panel performed later is further improved.

According to the configuration according to claim 6, the fitting portion, the placement portion, and the flange portion are formed integrally with each other so as to have an uniform thickness, whereby it is possible to easily manufacture the plant holder by, e.g., injection molding, and it is possible to manufacture the optimum plant holder inexpensively in accordance with the plant stock, the transplantation device, and the cultivation panel.

In addition, the weight of the entire plant holder is reduced so that it is possible to reduce a load of a device which handles the plant holder, and it is possible to reduce the scale and the cost of the facility.

According to the transplantation device according to claim 7, it is possible for the two holding arms to support the flange portion from below and lift the entire plant holder upward only by inserting the two holding arms from the side such that the engagement portion of the plant holder is held between the holding arms and moving the holding arms upward, and hence, in the case where the transplantation and the harvest operation are automated, an operation is simplified, a complicated mechanism is not required, and it is possible to improve the workability at the time of the automation.

According to the configuration according to claim 8, the transplantation device further includes, between the two holding arms of the holding portion, an abutment portion formed into a shape along an outer shape of the engagement portion of the plant holder, whereby, in addition to the two holding arms, it becomes possible for the abutment portion to support the flange portion from below and lift the entire plant holder upward, and it becomes possible to hold and move the plant holder more reliably.

According to the configuration according to claim 9, even in the case where the plant holder is inclined forward when the two holding arms support the flange portion from below and lift the entire plant holder upward, an upper portion of the engagement wall portion formed in the flange portion abuts on a hook portion to prevent further inclination, and the plant holder is prevented from being inclined and rolling forward on the two holding arms and being disconnected.

According to the configuration according to claim 10, an upper surface side of each of the two holding arms is formed into a shape in which a tip side is inclined downward, whereby, when the two holding arms lift the entire plant holder upward, the plant holder is slightly inclined forward, the upper portion of the engagement wall portion formed in the flange portion is engaged with the hook portion at this point, and the movement in a tip direction is regulated by a regulation portion.

With this, it is possible to prevent the forward movement of the plant holder and further inclination reliably, and prevent the plant holder from being disconnected from upper portions of the two holding arms reliably.

In addition, when the plant holder is placed on the cultivation panel or the like, the plant holder returns to a horizontal posture, whereby the above engagement is released, it is possible to smoothly retract the two holding arms, and it is possible to improve the workability in the automation without providing another movable mechanism or the like with a simple configuration.

### Brief Description of Drawings

FIG. 1 is a perspective view of a state in which a plant holder according to an embodiment of the present invention is held by a transplantation device;
FIG. 2 is a plan view of FIG. 1;
FIG. 3 is a side view of FIG. 1;
FIG. 4 is an A-A cross-sectional view of FIG. 2;
FIG. 5 is a perspective view of a state in which an transplantation device according to the embodiment of the present invention is moved close to the plant holder;
FIG. 6 is a perspective view of a state in which the transplantation device according to the embodiment of the present invention is being inserted to sides of the plant holder;
FIG. 7 is a side view of FIG. 6;
FIG. 8 is an explanatory view of a conventional cultivation panel, and a state (a) before a plant stock is held and a state (b) in which the plant stock is held; and
FIG. 9 is an explanatory view of the conventional cultivation panel a state before a grown plant stock is held.

### Reference Signs List

- 101 ...: plant stock

- 102 ...: support
- 103 ...: leaf
- 104 ...: root
- 110 ...: plant holder
- 111 ...: fitting portion
- 112 ...: flange portion
- 113 ...: placement portion
- 114 ...: plant stock support hole
- 116 ...: flat surface portion
- 118 ...: engagement wall portion
- 120 ...: cultivation panel
- 121 ...: holding hole
- 130 ...: holding portion (of transplantation device)
- 131 ...: holding arm
- 132 ...: abutment portion
- 133 ...: hook portion
- 134 ...: regulation portion

### Description of Embodiment

The specific configuration of the plant holder of the present invention may be any configuration as long as the plant holder is a plant holder that has an outer peripheral portion, at least part of which is fitted in a holding hole of a cultivation panel, and a plant stock support hole supporting a plant stock directly or indirectly, and that is held by the cultivation panel, the plant holder including a fitting portion fitted in the holding hole of the cultivation panel and having the plant stock support hole in an inner surface, a placement portion provided above the fitting portion, and a flange portion provided above the placement portion, wherein an outer diameter of the flange portion is formed larger than an outer diameter of the placement portion, the outer diameter of the placement portion is formed larger than an outer diameter of the holding hole of the cultivation panel, and the plant holder is capable of, with a simple configuration, causing a root of the plant stock to pass through the holding hole downwardly without damaging the root of the plant stock, preventing a leaf from drooping downward and being damaged, and improving workability when transplantation and harvest are automated without damaging the plant stock by contact with the plant stock.

For example, as the material of the plant holder, any material such as a resin or a metal excellent in water resistance, corrosion resistance, and durability may be used.

As long as the cultivation panel is provided with a plurality of the holding holes which extend through the cultivation panel vertically, and each holding hole is formed such that the plant holder can be fitted in the holding hole, its specific configuration may be any configuration.

For example, as the material of the cultivation panel, similarly to the plant holder of the present invention, any material such as a resin or a metal excellent in water resistance, corrosion resistance, and durability may be used.

As long as the transplantation device of the present invention is a transplantation device including a holding portion holding the plant holder according to any one of claims 1 to 6, wherein the holding portion is provided with two holding arms which extend forward, and a distance between the two holding arms is formed larger than a diameter of the placement portion and smaller than a diameter of the flange portion, its specific configuration may be any configuration.

For example, as the material of the holding arm, similarly to the plant holder of the present invention, any material such as a resin or a metal excellent in water resistance, corrosion resistance, and durability may be used.

In addition, a drive mechanism or a control device for moving the holding arm when a transplantation operation is performed may be any mechanism or device, and may be the mechanism or the device which includes a mechanism for holding and moving the cultivation panel or the mechanism or the device which includes the suction device described in Patent Document 2.

### Embodiment

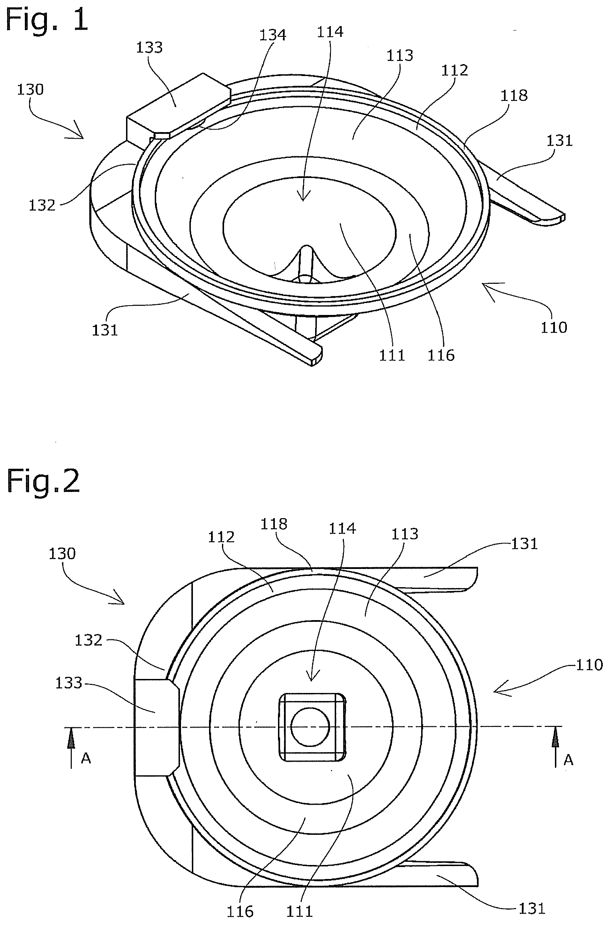

An embodiment of each of the plant holder and the transplantation device of the present invention will be described based on FIGS. 1 to 7.

A plant holder 110 as the embodiment of the present invention is integrally formed of a resin or the like so as to have a substantially uniform thickness, and has a flange portion 112, a placement portion 113, and a fitting portion 111 from above.

An inner surface of the fitting portion 111 has a plant stock support hole 114 formed into a tapered shape, and its outer periphery is formed into a tapered shape which can be inserted into a holding hole 121 of a cultivation panel 120 from above.

In the present embodiment, the lowermost portion of the fitting portion 111 is formed into a shape of a square tube having a large thickness in order to maintain strength.

The outer diameter of the placement portion 113 is formed larger than the outer diameter of the fitting portion 111, and the placement portion 113 has a flat surface portion 116 formed into a flat shape which comes into contact with a surrounding portion of the holding hole 121 of the cultivation panel 120 to be placed stably in a lower portion.

The outer diameter of the flange portion 112 is formed larger than the outer diameter of the placement portion 113, and the flange portion 112 has an engagement wall portion 118 which is provided upright in an upper portion.

Note that, in the present embodiment, the fitting portion 111, the placement portion 113, and the flange portion 112 are integrally formed with each other with a resin or the like, but a structure may also be adopted in which they are formed separately, assembled, and fixed to each other integrally.

Next, a description will be given of the transplantation device which causes the plant holder 110 to be held by the cultivation panel 120 or causes the plant holder 110 to be separated from the cultivation panel 120 at the time of transplantation and a harvest operation.

The transplantation device according to the embodiment of the present invention has a holding portion 130 provided with two holding arms 131 which extend forward, and is configured to be movable at least vertically with respect to a surface of the cultivation panel 120 by a drive mechanism which is not shown.

Note that the holding portion 130 and the cultivation panel 120 need to move relative to each other in a direction (horizontal direction) parallel to the surface of the cultivation panel 120 and, with regard to the relative movement, the holding portion 130 may be configured to be movable by a drive mechanism that is not shown, and only the cultivation panel 120 may also be configured to be movable.

The distance between the two holding arms 131 is formed larger than the diameter of the placement portion 113 of the plant holder 110 and smaller than the diameter of the flange portion 112, and an abutment portion 132 formed into a shape along an outer shape of the placement portion 113 of the plant holder 110 is provided between the two holding arms 131.

In the present embodiment, the abutment portion 132 is formed into a shape along substantially half of the outer surface of the placement portion 113 of the plant holder 110.

In addition, each of the two holding arms 131 is formed such that the thickness thereof is smaller than the height of the placement portion 113 of the plant holder 110 (a distance between the flange portion 112 and the fitting portion 111).

Above the abutment portion 132, a hook portion 133 is formed at a position which covers an upper portion of the engagement wall portion 118 formed in the flange portion 112 when inserted to both sides of the placement portion 113 of the plant holder 110 and the abutment portion 132 abuts on the placement portion 113 (a state shown in each of FIGS. 1 to 4).

In addition, an upper surface side of each of the two holding arms 131 is formed into a shape in which a tip side is inclined downward, and a regulation portion 134 is formed below the hook portion 133.

The regulation portion 134 is formed so as to allow the passage of the engagement wall portion 118 in the case where the plant holder 110 is horizontal, and is configured to be engaged with the engagement wall portion 118 to regulate the movement of the plant holder 110 in a tip direction when the plant holder 110 is inclined along the upper surface of each of the two holding arms 131.

Next, a description will be given of the operation of the thus configured transplantation device according to the present embodiment.

When the plant stock grows and the plant holder 110 is transplanted or the plant stock is harvested, the plant stock is separated from the cultivation panel 120 upwardly together with the plant holder 110.

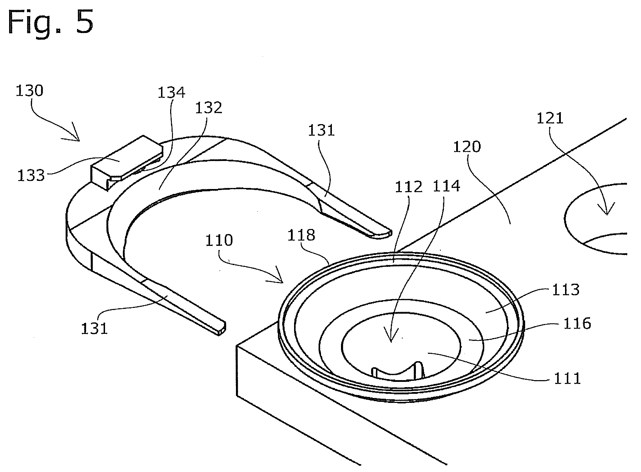

First, the holding portion 130 having the two holding arms 131 moves to the side of the plant holder 110 held by the cultivation panel 120 on the horizontal plane (the cultivation panel 120 may move or both thereof may move), and the two holding arms 131 move vertically to the height (a position shown in FIG. 5) positioned between the flange portion 112 and the fitting portion 111.

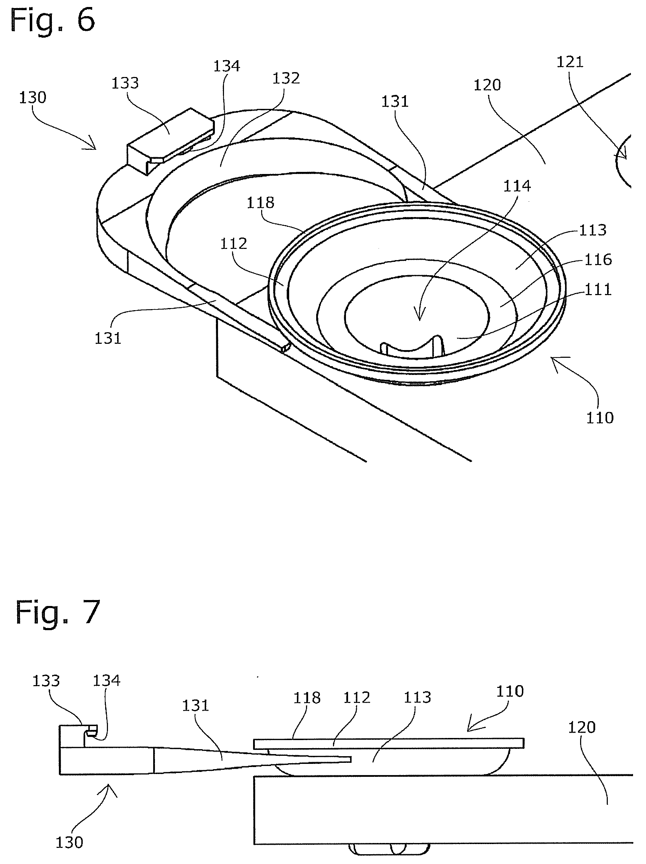

In this state, the holding portion 130 is moved horizontally in a direction in which the holding portion 130 is moved closed to the plant holder 110 while the vertical position thereof is maintained, the two holding arms 131 are inserted to both sides of the placement portion 113 (a state shown in each of FIGS. 6 and 7), and the abutment portion 132 is moved to a position at which the abutment portion 132 abuts on the placement portion 113 (a position shown in each of FIGS. 1 and 2).

Subsequently, in this state, by moving the holding portion 130 having the two holding arms 131 vertically upward, the two holding arms 131 of the holding portion 130 and the abutment portion 132 lift the flange portion 112 of the plant holder 110 from below, and causes the plant holder 110 to be separated from the cultivation panel 120 upwardly.

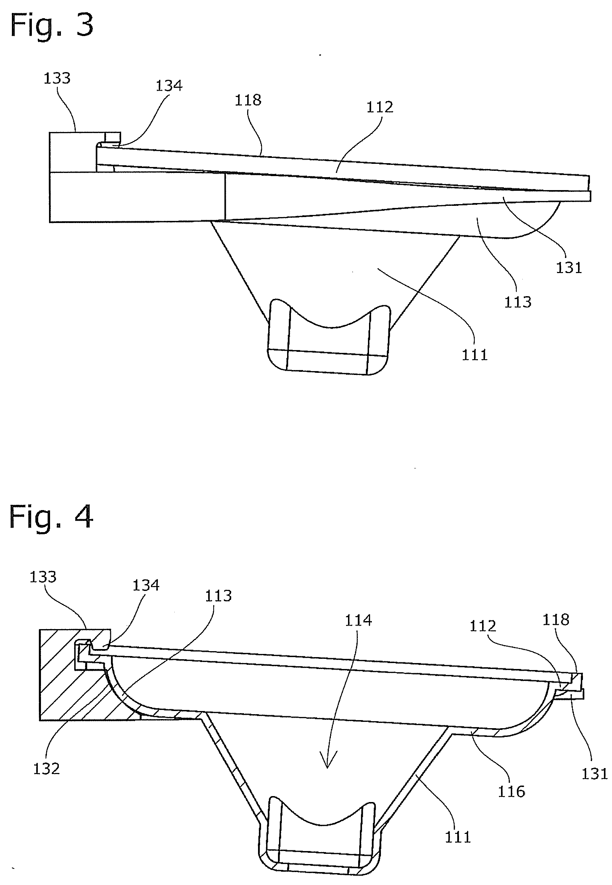

At this point, the tip side of the upper surface side of each of the two holding arms 131 is formed into the shape which is inclined downward, the hook portion 133 having the regulation portion 134 is formed above the abutment portion 132, and, as shown in FIGS. 3 and 4, the plant holder 110 is thereby inclined to the tip side. In addition, the regulation portion 134 is engaged with the engagement wall portion 118 to regulate the movement of the plant holder 110 in the tip direction, and it is thereby possible to reliably hold the plant holder 110 without disconnecting the plant holder 110 from upper portions of the two holding arms 131, and automatically perform the transplantation or the harvest operation.

After the plant stock is separated from the cultivation panel 120 upwardly together with the plant holder 110 in the state in which the plant stock is supported by the plant holder 110, when the plant holder 110 is transplanted to another cultivation panel 120, it is possible to easily insert the plant holder 110 into the cultivation panel 120 from above by performing an operation opposite to the above-described operation.

At this point, since the outer surface of the fitting portion 111 of the plant holder 110 is formed into the tapered shape, the fitting portion 111 of the plant holder 110 is smoothly inserted into the holding hole 121 without requiring high positioning accuracy of the holding portion 130 or high stability of the operation, and it becomes possible to reliably fix the plant holder 110 at a precise position.

In addition, with the formation of the flat surface portion 116 formed into the flat shape which comes into contact with the surrounding portion of the holding hole 121 of the cultivation panel 120 in the lower portion of the placement portion 113, the plant holder 110 automatically takes a horizontal posture when the plant holder 110 is fitted in the holding hole 121 of the cultivation panel 120, the engagement of the regulation portion 134 with the engagement wall portion 118 is released, and the plant holder 110 is stably placed so that it becomes possible to simplify the entire transplantation device including the drive mechanism which is not shown.

In FIGS. 1 to 8 used in the description of the above embodiment and the operation, only necessary parts are simplified and depicted for better understanding, and FIGS. 1 to 8 don't depict actual dimensions and shapes or exclude other accessories or the like.

The specific detailed embodiment can be appropriately set, added, or modified without departing from the technical feature of the present invention.

According to the embodiment of each of the thus configured plant holder and the thus configured transplantation device of the present invention, it becomes possible to cause the root of the plant stock to pass through the holding hole downwardly without damaging the root of the plant stock, prevent the leaf from drooping downward and being damaged, and improve the workability when the transplantation and the harvest are automated without damaging the plant stock by contact with the plant stock with a simple configuration.

Note that the state in which the plant stock is supported by the plant holder 110 may be maintained until the cultivation by the cultivation facility which uses the cultivation panel is completed, and the plant stock may be transplanted to another plant holder 110 during the cultivation.

## Claims

1. A plant holder that has an outer peripheral portion, at least part of which is fitted in a holding hole of a cultivation panel, and a plant stock support hole supporting a plant stock directly or indirectly, and that is held by the cultivation panel,
the plant holder comprising: a fitting portion fitted in the holding hole of the cultivation panel and having the plant stock support hole in an inner surface; a placement portion provided above the fitting portion; and a flange portion provided above the placement portion, wherein
an outer diameter of the flange portion is formed larger than an outer diameter of the placement portion, and
the outer diameter of the placement portion is formed larger than an outer diameter of the holding hole of the cultivation panel.

2. The plant holder according to claim 1, wherein
the flange portion has an engagement wall portion which is provided upright in an upper portion.

3. The plant holder according to claim 1 or 2, wherein
the plant stock support hole is formed into a tapered shape, the diameter of which is reduced toward a lower portion from an upper portion.

4. The plant holder according to any one of claims 1 to 3, wherein
an outer surface of the fitting portion is formed into a tapered shape, the diameter of which is reduced toward a lower portion from an upper portion.

5. The plant holder according to any one of claims 1 to 4, wherein
at least part of a lower portion of the placement portion is formed into a flat shape which comes into contact with a surrounding portion of the holding hole of the cultivation panel.

6. The plant holder according to any one of claims 1 to 5, wherein
the fitting portion, the placement portion, and the flange portion are formed integrally with each other so as to have an uniform thickness.

7. A transplantation device comprising:
a holding portion holding the plant holder according to any one of claims 1 to 6, wherein
the holding portion is provided with two holding arms which extend forward, and
a distance between the two holding arms is formed larger than a diameter of the placement portion and smaller than a diameter of the flange portion.

8. The transplantation device according to claim 7, further comprising, between the two holding arms of the holding portion, an abutment portion formed into a shape along an outer shape of the placement portion of the plant holder.

9. The transplantation device according to claim 8, wherein
a hook portion is formed at a position which is above the abutment portion and covers an upper portion of the engagement wall portion formed in the flange portion of the plant holder when the two holding arms are inserted to both sides of the placement portion of the plant holder.

10. The transplantation device according to claim 9, wherein
an upper surface side of each of the two holding arms is formed into a shape in which a tip side is inclined downward, and
the hook portion is formed with a regulation portion which regulates movement of the engagement wall portion in a tip direction when the plant holder is inclined.
